# EUROPÄISCHE PATENTANMELDUNG

(11) **EP 1 500 381 A2**
(43) Veröffentlichungstag der Anmeldung: **26.01.2005**
(21) Anmeldenummer: 04090294.2
(22) Anmeldetag: 22.07.2004
(51) Int. Cl.: A61C 17/14

(54) **Vorrichtung zur Amalgamabscheidung**

(30) Priorität: 22.07.2003 DE 10333884; 05.08.2003 DE 20312226 U
(71) Anmelder: Dent.AE.G Dentale Abfall-Entsorgungs-Gesellschaft mbH, 15370 Vogelsdorf (DE)
(72) Erfinder: Giesel, Frank, 15370 Vogelsdorf (DE); Schengber, Petra, 06217 Beuna (DE)
(74) Vertreter: Gulde, Klaus W.

(57) **Zusammenfassung**

Die Erfindung betrifft eine Vorrichtung zur Amalgamabscheidung aus dentalen Abwässern.

Der Erfindung liegt die Aufgabe zugrunde, eine Vorrichtung zur Amalgamabscheidung mit einfach herzustellender Sedimentationsfläche anzubieten, bei der die Trennung des abgeschiedenen Amalgams von der Vorrichtung durch Recyceln der Gesamtvorrichtung auf sehr effektive Weise durchgeführt werden kann und mit der eine Füllstandsmessung ohne Verwendung externer Geräte möglich ist.

Die Lösung der Aufgabe erfolgt mit einer Vorrichtung, die dadurch gekennzeichnet ist, dass das Gehäuse (10), in dem eine Eintrittskammer (40), eine Durchtrittskammer (50), in der sich ein aus Folien bestehender Abscheider (30) befindet, und eine Austrittskammer (60) angeordnet sind, bis auf einen Abwassereintritt (41) und einen Abwasseraustritt (61) flüssigkeitsdicht verschlossen ist und Standfüße (13, 14) aufweist, wobei in Hohlräumen der Standfüße (13, 14) sich mindestens eine Druckkammer (72) befindet, die mit Druckänderungen messenden Drucksensoren (75, 76) kombiniert ist.

## Beschreibung

Die Erfindung betrifft eine Vorrichtung zur Amalgamabscheidung gemäß dem Oberbegriff des Patentanspruches 1.

Dental-Amalgame sind Metallverbindungen aus Quecksilber, Silber, Zink, Kupfer. Aufgrund ihrer guten physikalischen Eigenschaften werden Amalgame bei der Zahnfüllungsherstellung im Dentalbereich genutzt. Beim Einbringen von Amalgam-Füllungen und beim Entfernen dieser Füllungen durch Ausbohren entstehen Amalgamabfälle. Diese werden zusammen mit aus dem Mund abgesaugtem Spülwasser und Speichel in das Abwassersystem des Zahnarztes überführt. Um einen Eintritt dieser Schwermetalle in das Abwasserbeseitigungssystem zu verhindern, besteht das Problem, die Amalgampartikel vor dem Eintritt in das öffentliche Kanalisationssystem zu entfernen.

Bekannt ist die Verwendung von Zentrifugen, die die Amalgampartikel aufgrund ihrer höheren Dichte aus dem Abwasser abscheiden. Nachteilig beim Einsatz von Zentrifugen ist das in bestimmten Abständen erforderliche Abschalten, damit aus den Trommeln der Niederschlag abfließen kann. Hinzu kommt, dass die Zentrifugalabscheider eine aufwendige Gerätetechnik erfordern. Mit einem schnell laufenden Motor enthalten sie bewegte Teile. Das Verfahren ist teuer und wartungsintensiv. Es ist eine dauerhafte Netzversorgung erforderlich.

Die Sammelbehälter der Abscheider müssen regelmäßig gewechselt und der Entsorgung zugeführt werden.

Bekannt sind auch filternde Abscheider, die den abzutrennenden Feststoff, in diesem Falle Amalgam, aus den dentalen Abwässern heraus filtern. Da das Amalgam einen sehr hohen Feinstkornanteil enthält, neigen die Filter nachteiligerweise schnell zum Zusetzen und Verstopfen.

Sedimentationsabscheider nutzen das Sinkverhalten der relativ schweren Amalgampartikel. Sie weisen eine im Wesentlichen horizontale Wasserströmung auf, deren Geschwindigkeit so klein sein muss, dass die Partikel während der Verweilzeit mit ihrer Sinkgeschwindigkeit die Sedimentationsfläche erreichen können. Daraus resultiert die Notwendigkeit kleiner Sinkwege bei großen Sedimentationsflächen. Das Amalgam sinkt in Richtung Sedimentationsfläche und kommt auf dieser zum Liegen. Die Strömungsgeschwindigkeit des dentalen Abwassers darf nicht so groß sein, dass die Partikel wieder von der Sedimentationsfläche abgespült werden. Zur Gewährleistung der Abscheidewirkung muss ein maximaler Wasserdurchfluss festgelegt werden.

So ist in der WO 98/46 324 eine Vorrichtung zur Abscheidung von Feststoffen aus Flüssigkeiten durch Sedimentation, insbesondere zur Abscheidung von Amalgam aus Wasser beschrieben. Diese Vorrichtung weist ein Gehäuse mit Durchströmungs- und Sedimentationsbereichen auf. Der Sedimentationsbereich besteht aus einer größeren Zahl parallel fixierter, horizontal angeordneter Platten, deren Oberflächen Erhöhungen und Vertiefungen aufweisen, die die Platten in einem bestimmten Abstand halten. Durch die Räume zwischen den Platten wird in laminarer Strömung das Abwasser geführt. Hierbei sedimentieren die Amalgamteilchen auf den Plattenoberflächen. Diese Vorrichtung ist zur mehrfachen Verwendung ausgeführt und hat den Nachteil, dass der Reinigungsaufwand, d.h. das Entfernen der niedergeschlagenen Amalgamteilchen von den Platten, sehr aufwendig ist. Die Fertigung des Plattenpaketes aus Edelstahl ist sehr aufwendig und teuer. Laut Vorschrift muss der Abscheider mit einer Füllstandsmesseinrichtung ausgestattet sein. In diesem Falle wird die Beladungsmenge bestimmt, in dem der gesamte Abscheider auf eine externe Waage gestellt wird, die die Menge des abgeschiedenen Amalgams misst. Das verteuert die Amalgamabscheidung in einer Zahnarztpraxis.

Der Erfindung liegt die Aufgabe zugrunde, eine Vorrichtung zur Amalgamabscheidung mit einfach herzustellender Sedimentationsfläche anzubieten, bei der die Trennung des abgeschiedenen Amalgams von der Vorrichtung durch Recyceln der Gesamtvorrichtung auf sehr effektive Weise durchgeführt werden kann. Weiterhin soll eine Füllstandsmessung ohne Verwendung externer Geräte möglich sein.

Die Lösung der Aufgabe erfolgt mit den Merkmalen der Patentansprüche 1 und 23. Vorteilhafte Weiterbildungen sind in den Unteransprüchen angegeben.

So ist die erfindungsgemäße Vorrichtung zur Amalgamabscheidung aus dentalen Abwässern, bestehend aus Durchströmungsbereiche und Sedimentationsbereiche, die in einem Gehäuse mit mindestens einer Öffnung für die Abwasserzuführung und mindestens einer Öffnung für die Abwasserabführung angeordnet sind, dadurch gekennzeichnet, dass im Gehäuse (10) mindestens ein aus mindestens einer Folienart (32, 34) zusammengesetzter Abscheider (30) angeordnet ist.

Weiterhin ist die erfindungsgemäße Vorrichtung zur Amalgamabscheidung aus dentalen Abwässern, bestehend aus Durchströmungsbereich und Sedimentationsbereich, die in einem Gehäuse mit einer Öffnung für die Abwasserzuführung und einer Öffnung für die Abwasserabführung angeordnet sind, dadurch gekennzeichnet, dass das Gehäuse, in dem eine Eintrittskammer, eine Durchtrittskammer, in der sich ein aus Folienlagen bestehender Abscheider befindet, und eine Austrittskammer angeordnet sind, bis auf einen Abwassereintritt und einen Abwasseraustritt flüssigkeitsdicht verschlossen ist und Standfüße aufweist, wobei in Hohlräumen der Standfüße sich mindestens eine Druckkammer befindet, die mit Druckänderungen messenden Drucksensoren kombiniert ist.

In einer Ausgestaltung der Erfindung ist die Eintrittskammer, die Durchtrittskammer mit dem Abscheider sowie die Austrittskammer in Fließrichtung horizontal nacheinander angeordnet, wobei sich der Abwassereintritt und der Abwasseraustritt jeweils an der höchsten Stelle der Eintrittskammer bzw. der Austrittskammer befinden.

In einer Weiterbildung der Erfindung ist der Abscheider ein durchströmbarer Formkörper, der aus einer in mehreren Lagen anliegenden Strukturfolie besteht.

In einer weiteren Ausbildung der Erfindung ist der Abscheider ein durchströmbarer Formkörper, der aus mehreren alternierend angeordneter Lagen, einer eng anliegenden Strukturfolie und einer Glattfolie besteht.

Gemäß einer weiteren Ausgestaltung der Erfindung besteht der einen Formkörper bildende Abscheider aus einer gewickelten Strukturfolie oder mit einer Glattfolie kombinierten gewickelter Strukturfolie, so dass durch einfache Aufwicklung beider Folien oder auch nur der Strukturfolie ein in Längsrichtung durchströmbarer Formkörper entsteht.

Eine weitere Ausgestaltung der Erfindung sieht vor, dass der einen Formkörper bildende Abscheider aus ineinander geschobenen, aus Strukturfolie oder Strukturfolie und Glattfolie bestehenden, rohrförmigen Elementen besteht.

Weitere Ausgestaltungen der Erfindung sehen vor, dass die Längsstrukturierungen durch unterschiedliche Plissierstrukturen wie Dreiecke, Vierecke oder Trapeze gebildet werden. Darüber hinaus ist auch möglich, lamellenartige, wabenartige oder wellenartige Strukturen zu verwenden.

Vorteilhaft ist es auch, die Strukturfolie so zu gestalten, dass nur punktuelle Erhöhungen oder Vertiefungen vorgesehen sind. Weitere hier nicht gesondert genannte Strukturen mit auch abstandshaltender Wirkung fallen natürlich unter den Begriff Strukturfolie. Die Abstände zwischen den Folienlagen liegen optimal zwischen 1 und 10 mm.

In einer weiteren Ausgestaltung ist vorgesehen, dass die Sedimentationsflächen der Strukturfolie aufgeraut sind, um noch. eine bessere Sedimentation der Amalgamteilchen zu erreichen.

In einer weiteren Ausgestaltung der Erfindung ist zwischen Eintrittskammer und Durchtrittskammer eine Lochplatte angeordnet, deren Löcher anströmseitig Senkungen aufweisen.

Von wesentlichem Vorteil ist auch gemäß einer Weiterbildung der Erfindung, ein in der Eintrittskammer vorgesehenes Strömungsleitelement, das in den oberen Bereich der Eintrittskammer angeordnet ist. In Kombination mit der Lochplatte wird damit über die gesamte Höhe des Gehäuses eine laminare Strömung in den Strömungskanälen des Abscheiders erzeugt. Eine vollständige Befüllung des Gehäuses mit Wasser ohne Toträume ist dadurch möglich. Hinzu kommt eine vorteilhafte Geruchsverschluss-Wirkung.

Eine weitere Ausgestaltung der Erfindung sieht vor, dass an der höchsten Stelle der Durchtrittskammer oberhalb des Abscheiders ein Entlüftungskanal angeordnet ist, der mit dem in der Austrittskammer befindlichen Abwasseraustritt in Verbindung steht. Dadurch wird erreicht, dass entstehende Gase oder vorhandene Lufteinschlüsse in Verbindung mit der Strömungsführung in diesem Entlüftungskanal gesammelt und direkt durch den Abwasseraustritt aus der Vorrichtung entfernt werden können.

Eine weitere Ausgestaltung sieht im Abwasseraustritt eine Durchflussbegrenzung vor.

Eine besondere Ausgestaltung der Erfindung sieht vor, dass die in einem Standfuß befindliche Druckkammer eine gasundurchlässige, elastische Folie aufweist, die nach Füllung mit Luft oder einem anderen Gas unter leichtem Überdruck eine Wölbung nach außen aufweist, so dass bei einer Masseerhöhung der Vorrichtung bei der Abscheidung von Amalgam durch Eindrücken der Folie ein höherer messbarer Druck in der Druckkammer entsteht, der als Maß für die Füllstandsanzeige dient. Dazu ist es erforderlich, dass der Füllstandsmesser drucksensorisch mit der Druckkammer verbunden ist.

Die erfindungsgemäße Vorrichtung besteht aus recycelbaren Kunststoff. Sie lässt sich zerkleinern und vollständig recyceln, wenn das Amalgam abgetrennt ist.

Im Folgenden wird die Erfindung anhand eines Ausführungsbeispieles und Zeichnungen näher erläutert.

Es zeigen
- Fig. 1: einen schematischen Längsschnitt der Vorrichtung mit drahtlos übertragbarer Füllstandsanzeige,
- Fig. 2: einen schematischen Längsschnitt der Vorrichtung mit außen anliegender Füllstandsanzeige,
- Fig. 3: eine Querschnittsdarstellung der Eintrittskammer des Abscheiders in Fließrichtung gesehen,
- Fig. 4: eine perspektivische beispielhafte Darstellung der Gesamtvorrichtung,
- Fig. 5: eine perspektivische Darstellung des geteilten Gehäuses der Vorrichtung,
- Fig. 6: eine schematische Schnittdarstellung des Abscheiders mit aus Struktur- und Glattfolie gebildeten, ineinander geschobenen rohrförmigen Elementen,
- Fig. 7: eine schematische Querschnittsdarstellung des Abscheiders in der aufgewickelten Variante,
- Fig. 8: eine schematische Querschnittsdarstellung des Abscheiders mit quadratischer Querschnittsfläche unter Verwendung rohrförmiger Einzelelemente,
- Fig. 9: eine schematische Querschnittsdarstellung des Abscheiders in der aufgewickelten Variante mit quadratischem Querschnitt,
- Fig.10 bis Fig.16: verschiedene Ausgestaltungen der Strukturfolie,
- Fig.17: eine schematische Darstellung der Verbindung einer Strukturfolie mit einer Glattfolie,
- Fig. 18: eine schematische perspektivische Darstellung eines Abscheiders und
- Fig. 19: eine Querschnittsdarstellung der Austrittskammer entgegen der Fließrichtung gesehen.

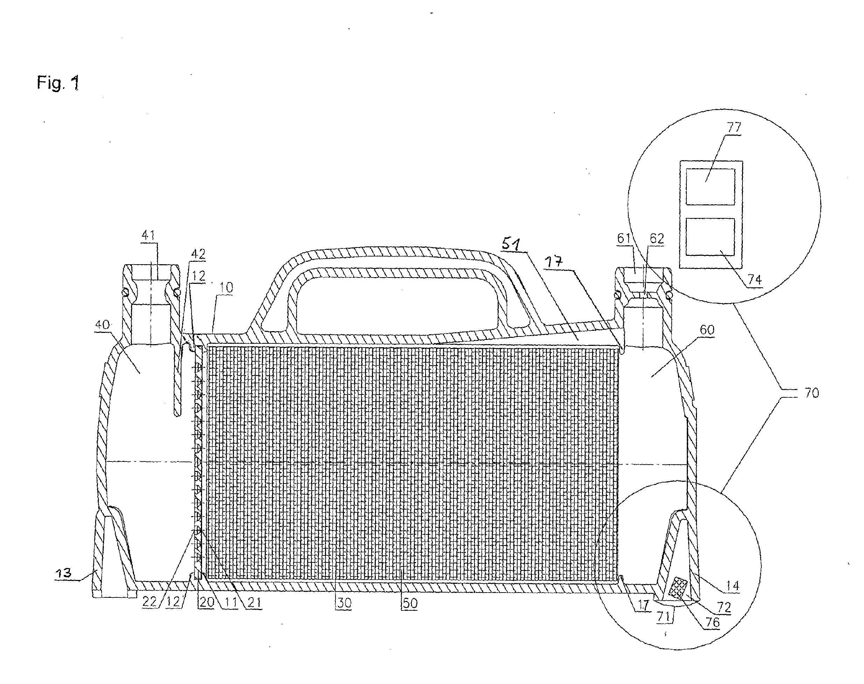

Fig. 1 zeigt in schematischer Darstellung einen Längsschnitt der erfindungsgemäßen Vorrichtung. Im Inneren eines Gehäuses 10 sind eine Eintrittskammer 40, eine Durchtrittskammer 50 und eine Austrittskammer 60 vorgesehen. Das Gehäuse 10 weist einen Griff 15 auf, mit dem es möglich ist, die Vorrichtung auf einfache Weise zu transportieren. Im unteren Bereich des Gehäuses 10 ist ein Standfuß (vorn) 13 und ein Standfuß (hinten) 14 angeordnet, auf denen die Vorrichtung einen sicheren Stand hat. Durch einen Abwassereintritt 41 gelangt das Abwasser in die Eintrittskammer 40. Ein Strömungselement 42, das von oben in die Eintrittskammer hineinragt und die Durchflussfläche um etwa 30% begrenzt, ermöglicht die Ausbildung eines syphonartigen Geruchsverschlusses.

Das Abwasser fließt dann durch eine Lochplatte 20, in der eine größere Anzahl von Löchern 21 über die Fläche der Lochplatte 20 verteilt angeordnet sind, die anströmseitig eine Senkung 22 aufweisen. Die Lochplatte 20 wird zwischen einer Arretierung(vorn) 11 und einer Arretierung(hinten) 12 gehaltert. In der Durchtrittskammer 50, die hinter der Lochplatte 20 angeordnet ist, befindet sich ein Abscheider 30. Der Abscheider 30 wird durch die Arretierung(hinten) und eine Haltekante 17 in der Durchtrittskammer 40 fixiert. Oberhalb des Abscheiders 30 ist in der Durchtrittskammer 50 ein Entlüftungskanal 51 vorgesehen, der unmittelbare Verbindung mit der Austrittskammer 60 besitzt. In dem sich etwa von der Mitte der Durchtrittskammer 50 bis zur Austrittskammer 60 hinziehenden Entlüftungskanal 51 können sich eventuell entstehende Gase bzw. Lufteinschlüsse sammeln, die dann direkt über einen Abwasseraustritt 61 der Austrittskammer 60 abgeleitet werden können.

Im Abwasseraustritt 61, der an der höchsten Stelle der Austrittskammer 60 angeordnet ist, befindet sich eine Durchflussbegrenzung 62.

In bzw. außerhalb des Gehäuses 20 ist eine Füllstandsmessung 70 angeordnet. Als Teil dieser Füllstandsmessung ist im Standfuß(hinten) 14 eine Druckkammer 72 vorgesehen, die mit einer Folie 71, die gasundurchlässig und elastisch ist, nach unten verschlossen ist. Aufgrund der Gasfüllung, die unter leichtem Überdruck steht, ist die Folie 71 nach außen gewölbt, so dass die gesamte erfindungsgemäße Vorrichtung einseitig, nur auf dem Standfuß(hinten) 14, auf einer Art Luftkissen steht. Je mehr Amalgam sich im Abscheider abscheidet, desto stärker ist der Druck auf die gewölbte Folie 71 und der Druck in der Druckkammer 72 erhöht sich. Die Druckerhöhung ist proportional zur Massenzunahme der Vorrichtung.
Ein in der Druckkammer 72 befindlicher Drucksensor(Funk) 76 ist mit einem Funksender versehen, der ein außen befindliches Empfangsgerät 77 mit den entsprechenden jeweiligen Druckdaten versorgt, wobei beim Erreichen eines Grenzwertes von einer integrierten Alarmbox 74 ein akustisches oder visuelles Signal abgegeben wird, dass die volle Beladung der Vorrichtung mit Amalgam signalisiert. In diesem Falle wird die gesamte Vorrichtung aus dem zahnärztlichen Abwassernetz entfernt und einem Entsorger zugeführt, der aufgrund der erfindungsgemäßen Materialwahl und Zusammensetzung der Vorrichtung das gesamte Gerät zerschreddert und das sedimentierte Amalgam auf einfache Weise abtrennt.
In der Arztpraxis kann unkompliziert nach der Entfernung des gefüllten Gerätes ein neues Gerät angeschlossen werden.

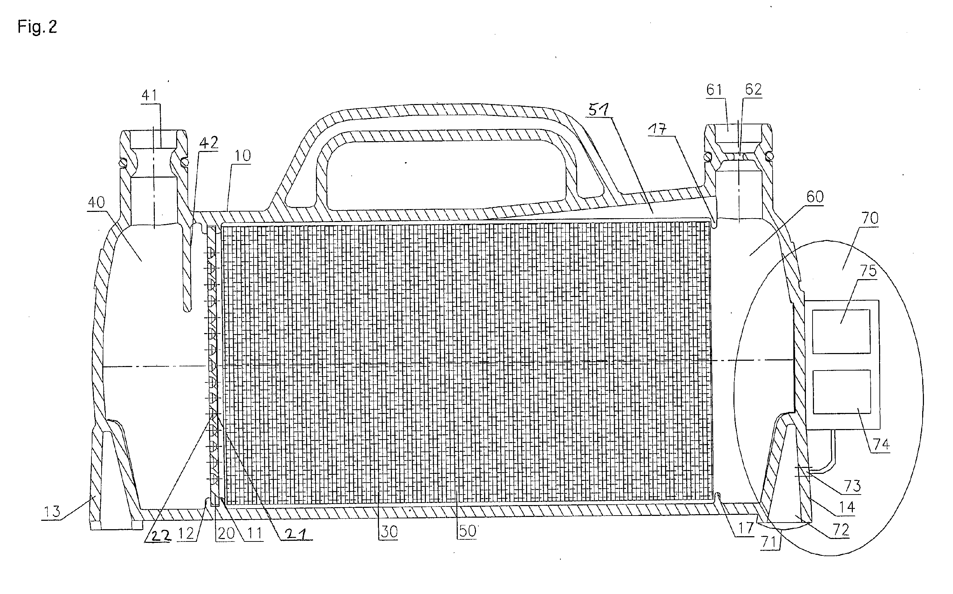

Fig. 2 zeigt eine zweite Variante der Füllstandsmessung, bei der über eine Druckdurchführung 73 durch eine Wandung 16 des Gehäuses 10 die Druckänderungen in der Druckkammer unmittelbar an einen außen angebrachten Drucksensor 75 übertragen wird, der dann die entsprechenden elektronischen Verarbeitungen durchführt, die die Alarmbox 74 zur Signalisierung des maximalen Füllstandes der Vorrichtung veranlassen.

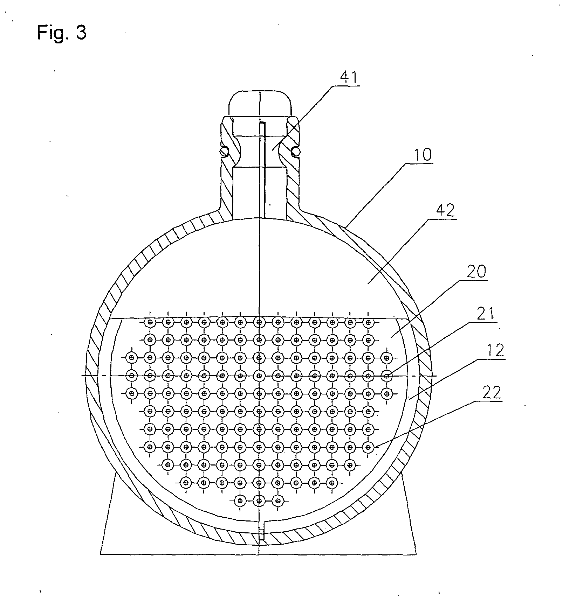

Fig. 3 zeigt die erfindungsgemäße Vorrichtung in Schnittdarstellung, wobei der Schnitt in Fließrichtung gesehen vor der Lochplatte 20 erfolgt ist. Die Löcher 21 der Lochplatte 20 sorgen dafür, dass größere Bestandteile des dentalen Abwassers an dieser Stelle zurückgehalten werden. Die Senkung 22 verhindert hierbei ein Verstopfen der kleineren Löcher 21. Das unmittelbar hinter dem Wassereintritt 41 angeordnete Strömungsleitelement 42 wirkt, nachdem das Gehäuse 10 vollständig mit Abwasser gefüllt ist, als Geruchsverschluss.

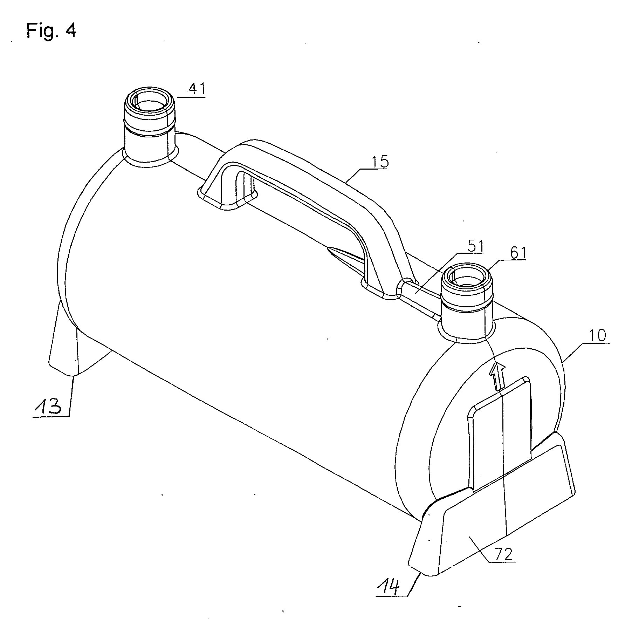

Fig. 4 zeigt beispielhaft in perspektivischer Darstellung die Gesamtansicht einer erfindungsgemäßen Vorrichtung mit dem Abwassereintritt 41, dem Abwasseraustritt 61 sowie dem Entlüftungskanal 51 und der Druckkammer 72. Am Griff 15 lässt sich die Vorrichtung handlich transportieren.
Die Vorrichtung ist so nicht mehr zu öffnen. Die Entfernung des Amalgams erfolgt nach Zerstörung der gesamten Vorrichtung durch beispielsweise Schreddern.

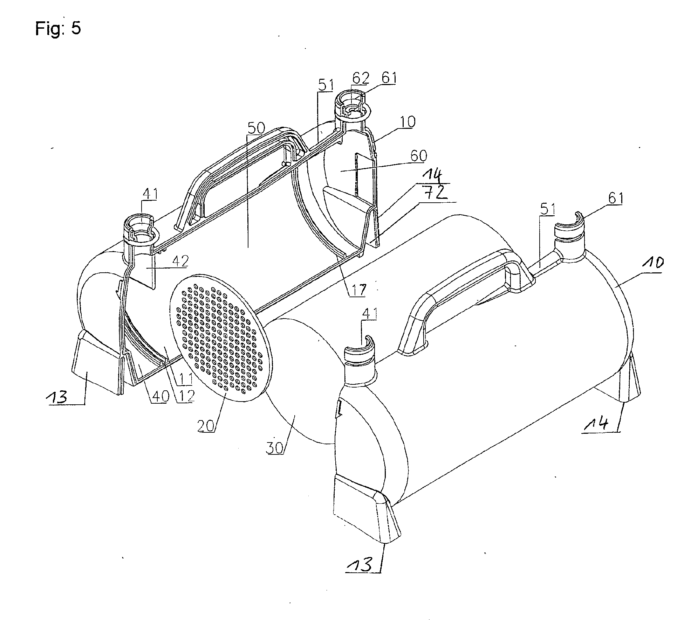

Fig. 5 zeigt ebenfalls beispielhaft die erfindungsgemäße Vorrichtung in zerlegter, perspektivischer Darstellung. Die beiden hier dargestellten Hälften des Gehäuses 10 werden nach dem Einbau der Lochplatte 20 und des Abscheiders 30 miteinander verklebt oder verschweißt. Ein Öffnen der Vorrichtung ist nicht vorgesehen, da das Gesamtgerät im Falle der maximalen Füllung mit Amalgam gegen ein neues Gerät ausgetauscht wird, während das gefüllte Gerät zerschreddert, das Amalgaman abgetrennt und das gesamte Material einem Recycling zugeführt wird.

Bei der in Fig. 4 und Fig. 5 dargestellten perspektivischen Form der erfindungsgemäßen Vorrichtung handelt es sich um eine bevorzugt eingesetzte zylindrische Form, da der aus der Strukturfolie 32 und Glattfolie 34 geformte Abscheider 30 sich in der zylindrischen Variante besonders vorteilhaft herstellen lässt. Das hier dargestellte Gehäuse 10 kann auf verschiedene Weise hergestellt werden, insbesondere bietet sich eine spritzgusstechnische Herstellung an. Im Gehäuse 10 sind die Eintrittskammer 40, die Durchtrittskammer 50 und die Austrittskammer 60 vorgeformt enthalten, wobei zwischen der Arretierung(vorn) 12 und der Arretierung(hinten) 11 die Lochplatte 20 fixiert und in der Durchtrittskammer 50 der Abscheider 30 eingelegt wird. Im oberen Teil des Gehäuses 10 jeweils an den Enden der zylindrischen Form sind auch in zylindrischer Ausführung der Abwassereintritt 41 und der Abwasseraustritt 61 angeordnet, die aufgrund ihrer Formung mit Abwasserschläuchen oder Rohren verbindbar sind. Der nach oben ausgewölbte Entlüftungskanal 51 erweitert sich von der Mitte des Gehäuses 10 zum Abwasseraustritt 61 hin, damit auftretende Gas- oder Luftansammlungen ungehindert in den Abwasseraustritt 61 eintreten können. Der außen angeformte Standfuß(vorn) 13 und der Standfuß(hinten) 14 verleihen der Vorrichtung ausreichende Standsicherheit. In den dort vorgesehenen Hohlräumen ist die Anordnung einer Druckkammer 72 erfindungsgemäß vorgesehen, die als Teil des Füllstandsmessers 70 eine exakte Beladungsdichte mit Amalgam möglich macht.

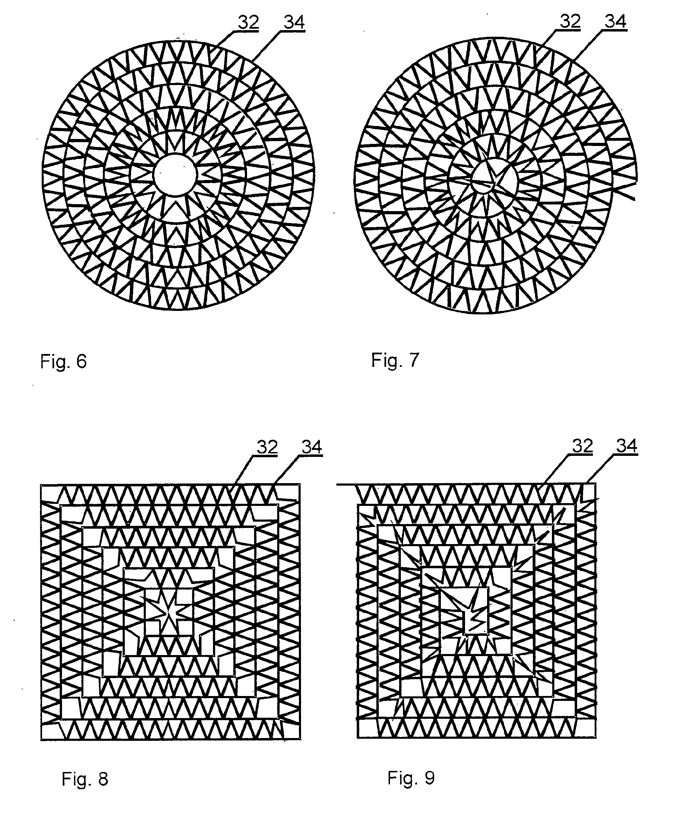

In Fig. 6 bis Fig. 9 sind Querschnittsvarianten des Abscheiders 30 dargestellt, der aus einer Strukturfolie 32 und einer Glattfolie 34 aufgebaut ist.

In Fig. 6 und Fig. 8 sind insbesondere die Kombinationen der Strukturfolie 32 und der Glattfolie 34 dargestellt, die durch das Ineinanderschieben rohrförmiger Elemente entstanden ist, während in Fig. 7 und Fig. 9 die beiden kombinierten Strukturfolien 32 und Glattfolien 34 aufgewickelt sind.

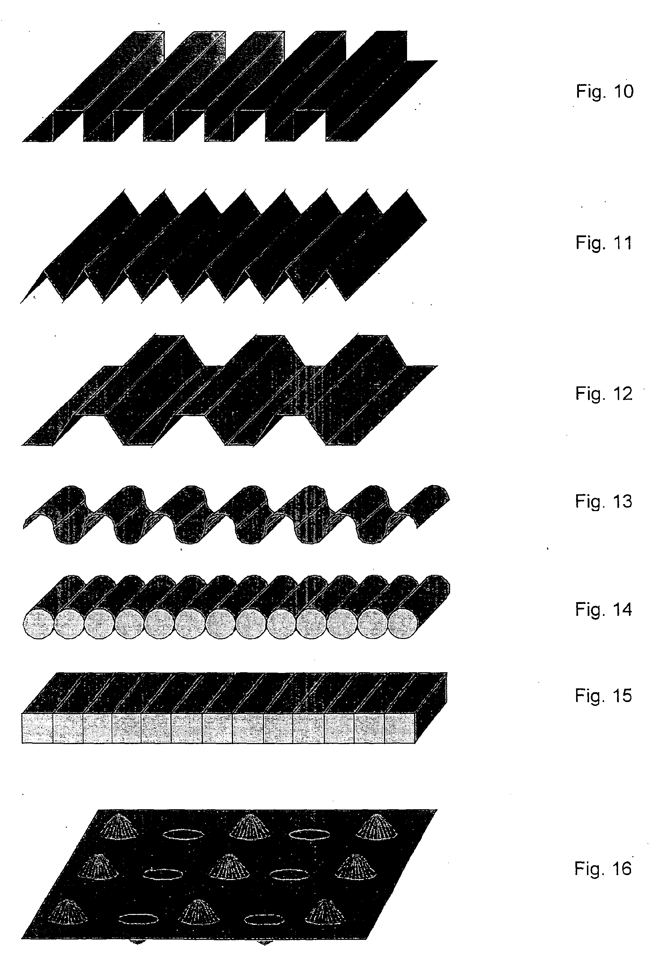

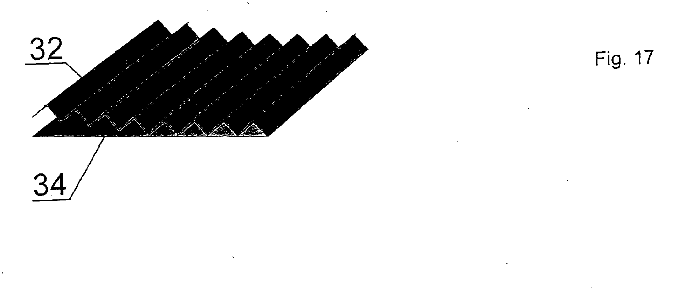

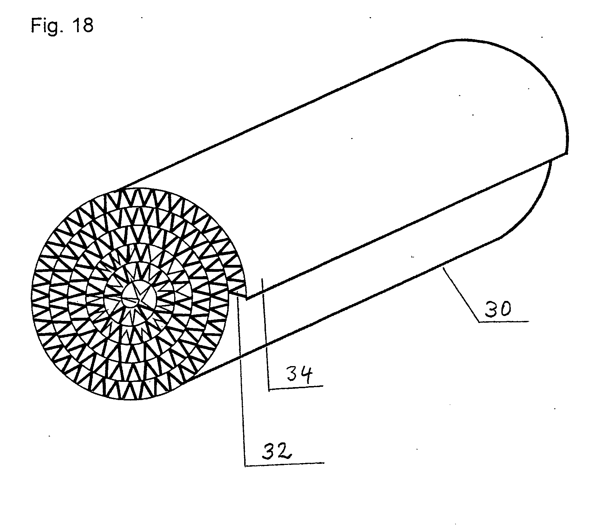

In Fig. 10 bis Fig. 16 sind beispielhaft verschiedene Ausführungen der Strukturfolie 32 dargestellt, die wie Fig. 17 zeigt, mit einer Glattfolie 34 kombiniert werden können, in dem beide zusammengelegt und anschließend aufgewickelt werden bis der Abscheider 30 die Form erreicht, die in die Durchtrittskammer 50 diese ausfüllend einlegbar ist. Diese Form ist beispielsweise in Fig. 18 perspektivisch dargestellt.

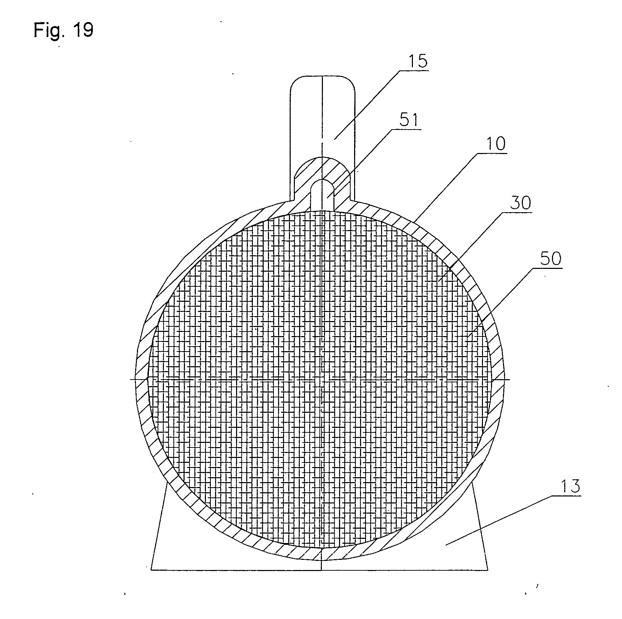

Fig. 19 zeigt eine Schnittdarstellung der Vorrichtung entgegen der Fließrichtung des Abwassers gesehen, aus der der in die Durchtrittskammer 50 eingelegte Abscheider 30 ersichtlich ist. Oberhalb des Abscheiders 30 ist der Entlüftungskanal 51 als Auswölbung des Gehäuses 10 angeordnet.

### Bezugszeichenliste

- 10: Gehäuse
- 11: Arretierung (hinten)
- 12: Arretierung (vorn)
- 13: Standfuß (vorn)
- 14: Standfuß (hinten)
- 15: Griff
- 16: Wandung
- 17: Haltekante

- 20: Lochplatte
- 21: Loch
- 22: Senkung

- 30: Abscheider
- 31: Strömungskanal
- 32: Strukturfolie
- 33: Wandung
- 34: Glattfolie

- 40: Eintrittskammer
- 41: Abwassereintritt
- 42: Strömungsleitelement

- 50: Durchtrittskammer
- 51: Entlüftungskanal

- 60: Austrittskammer
- 61: Abwasseraustritt
- 62: Durchflussbegrenzung

- 70: Füllstandsmesser
- 71: Folie
- 72: Druckkammer
- 73: Druckdurchführung
- 74: Alarmbox
- 75: Drucksensor
- 76: Drucksensor(Funk)
- 77: Empfangsgerät

## Patentansprüche

1. Vorrichtung zur Amalgamabscheidung aus dentalen Abwässern,
bestehend aus Durchströmungsbereiche und Sedimentationsbereiche, die in einem Gehäuse mit mindestens einer Öffnung für die Abwasserzuführung und mindestens einer Öffnung für die Abwasserabführung angeordnet sind,
**dadurch gekennzeichnet, dass**
im Gehäuse (10) mindestens ein aus mindestens einer Folienart (32, 34) zusammengesetzter Abscheider (30) angeordnet ist.

2. Vorrichtung nach Anspruch 1,
**dadurch gekennzeichnet, dass**
im oder am Gehäuse (10) ein Füllstandsmesser (70) angeordnet ist.

3. Vorrichtung nach Anspruch 1 oder 2,
**dadurch gekennzeichnet, dass**
das Gehäuse (10), in dem eine Eintrittskammer (40), eine Durchtrittskammer (50), in der sich der aus Folien bestehender Abscheider (30) befindet, und eine Austrittskammer (60) angeordnet sind, bis auf einen Abwassereintritt (41) und einen Abwasseraustritt (61) flüssigkeitsdicht verschlossen ist und Standfüße (13, 14) aufweist, wobei in Hohlräumen der Standfüße (13, 14) sich mindestens eine Druckkammer (72) befindet, die mit Druckänderungen messenden Drucksensoren (75, 76) kombiniert ist.

4. Vorrichtung nach einem der Ansprüche 1 bis 3,
**dadurch gekennzeichnet, dass**
die Eintrittskammer (40), die Durchtrittskammer (50) mit dem Abscheider (30) sowie die Austrittskammer (60) in Fließrichtung horizontal nacheinander angeordnet sind, wobei sich der Abwassereintritt (41) und der Abwasseraustritt (61) jeweils an der höchsten Stelle der Eintrittskammmer (40) bzw. Austrittskammer (60) befinden.

5. Vorrichtung nach einem der Ansprüche 1 bis 3,
**dadurch gekennzeichnet, dass**
der Abscheider (30) ein durchströmbarer Formkörper ist, der aus einer, in mehreren Lagen anliegenden Strukturfolie (32) besteht.

6. Vorrichtung einem der Ansprüche 1 bis 3,
**dadurch gekennzeichnet, dass**
der Abscheider (30) ein durchströmbarer Formkörper ist, der aus in mehreren Lagen alternierend anliegenden Strukturfolie (32) und einer Glattfolie (34) besteht.

7. Vorrichtung nach einem der Ansprüche 1 bis 6,
**dadurch gekennzeichnet, dass**
der einen Formkörper bildende Abscheider (30) aus einer gewickelten Strukturfolie (32) oder mit einer Glattfolie (34) kombiniert gewickelten Strukturfolie (32) besteht.

8. Vorrichtung nach einem der Ansprüche 1 bis 6,
**dadurch gekennzeichnet, dass**
der einen Formkörper bildende Abscheider (30) aus ineinander geschobenen, aus Strukturfolie (32) oder Strukturfolie (32) und Glattfolie (34) bestehenden rohrförmigen Elementen besteht.

9. Vorrichtung nach einem der Ansprüche 1 bis 8,
**dadurch gekennzeichnet, dass**
die Strukturfolie (32) in Fließrichtung des Abwassers gesehen durchgehende Längsstrukturen aufweist.

10. Vorrichtung nach einem der Ansprüche 1 bis 9,
**dadurch gekennzeichnet, dass**
die Strukturfolie (32) eine Plissierstruktur, bestehend aus Dreiecken, Vierecken, Trapezen, aufweist.

11. Vorrichtung nach einem der Ansprüche 1 bis 10,
**dadurch gekennzeichnet, dass**
die Strukturfolie (32) lamellenartige, wabenartige oder wellenartige Strukturen oder punktuelle Erhöhungen oder Vertiefungen aufweist.

12. Vorrichtung nach einem der Ansprüche 1 bis 11,
**dadurch gekennzeichnet, dass**
die Sedimentationsflächen der Strukturfolie (32) aufgeraut sind.

13. Vorrichtung nach einem der Ansprüche 1 bis 12,
**dadurch gekennzeichnet, dass**
das zwischen der Eintrittskammer (40) und der Durchtrittskammer (50) eine Lochplatte (20) angeordnet ist, deren in Löcher (21) anströmseitig Senkungen (22) aufweisen.

14. Vorrichtung nach einem der Ansprüche 1 bis 13,
**dadurch gekennzeichnet, dass**
die Eintrittskammer (40) ein Strömungsleitelement (42) aufweist, das im oberen Bereich der Eintrittskammer (40) angeordnet ist.

15. Vorrichtung nach einem der Ansprüche 1 bis 14,
**dadurch gekennzeichnet, dass**
an der höchsten Stelle der Durchtrittskammer (50) oberhalb des Abscheiders (30) eine Entlüftungskanal (51) angeordnet ist, der mit dem in der Austrittskammer (60) befindlichen Abwasseraustritt (61) in Verbindung steht.

16. Vorrichtung nach einem der Ansprüche 1 bis 15,
**dadurch gekennzeichnet, dass**
der Abwasseraustritt (61) eine Durchflussbegrenzung (62) aufweist.

17. Vorrichtung nach einem der Ansprüche 1 bis 16,
**dadurch gekennzeichnet, dass**
die in einem Standfuß (13, 14) vorgesehene Druckkammer (72) eine gasundurchlässige, elastische Folie (71) aufweist.

18. Vorrichtung nach einem der Ansprüche 1 bis 17,
**dadurch gekennzeichnet, dass**
die Druckkammer (72) Luft oder ein anderes Gas enthält und unter leichtem Überdruck steht.

19. Vorrichtung nach einem der Ansprüche 1 bis 18,
**dadurch gekennzeichnet, dass**
der Füllstandsmesser (70) drucksensorisch mit der Druckkammer (72) verbunden ist.

20. Vorrichtung nach einem der Ansprüche 1 bis 19,
**dadurch gekennzeichnet, dass**
die Querschnittsfläche des Abscheiders (30) rund, oval oder eckig ist.

21. Vorrichtung nach einem der Ansprüche 1 bis 20,
**dadurch gekennzeichnet, dass**
die Querschnittsfläche des Gehäuses (10) rund, oval oder eckig ist.

22. Vorrichtung nach einem der Ansprüche 1 bis 21,
**dadurch gekennzeichnet, dass**
die Vorrichtung aus recycelbaren Kunststoffen besteht.

23. Vorrichtung zur Amalgamabscheidung aus dentalen Abwässern,
bestehend aus Durchströmungsbereiche und Sedimentationsbereiche, die in einem Gehäuse mit einer Öffnung für die Abwasserzuführung und einer Öffnung für die Abwasserabführung angeordnet sind,
**dadurch gekennzeichnet, dass**
das Gehäuse (10), in dem eine Eintrittskammer (40), eine Durchtrittskammer (50), in der sich ein aus Folien bestehender Abscheider (30) befindet, und eine Austrittskammer (60) angeordnet sind, bis auf einen Abwassereintritt (41) und einen Abwasseraustritt (61) flüssigkeitsdicht verschlossen ist und Standfüße (13, 14) aufweist, wobei in Hohlräumen der Standfüße (13, 14) sich mindestens eine Druckkammer (72) befindet, die mit Druckänderungen messenden Drucksensoren (75, 76) kombiniert ist.

24. Vorrichtung nach Anspruch 23,
**dadurch gekennzeichnet, dass**
die Eintrittskammer (40), die Durchtrittskammer (50) mit dem Abscheider (30) sowie die Austrittskammer (60) in Fließrichtung horizontal nacheinander angeordnet sind, wobei sich der Abwassereintritt (41) und der Abwasseraustritt (61) jeweils an der höchsten Stelle der Eintrittskammmer (40) bzw. Austrittskammer (60) befinden.

25. Vorrichtung nach Anspruch 23 oder 24,
**dadurch gekennzeichnet, dass**
der Abscheider (30) ein durchströmbarer Formkörper ist, der aus einer, in mehreren Lagen anliegenden Strukturfolie (32) besteht.

26. Vorrichtung nach einem der Ansprüche 23 bis 25,
**dadurch gekennzeichnet, dass**
der Abscheider (30) ein durchströmbarer Formkörper ist, der aus in mehreren Lagen alternierend anliegenden Strukturfolie (32) und einer Glattfolie (34) besteht.

27. Vorrichtung nach einem der Ansprüche 23 bis 26,
**dadurch gekennzeichnet, dass**
der einen Formkörper bildende Abscheider (30) aus einer gewickelten Strukturfolie (32) oder mit einer Glattfolie (34) kombiniert gewickelten Strukturfolie (32) besteht.

28. Vorrichtung nach einem der Ansprüche 23 bis 26,
**dadurch gekennzeichnet, dass**
der einen Formkörper bildende Abscheider (30) aus ineinander geschobenen, aus Strukturfolie (32) oder Strukturfolie (32) und Glattfolie (34) bestehenden rohrförmigen Elementen besteht.

29. Vorrichtung nach einem der Ansprüche 23 bis 28,
**dadurch gekennzeichnet, dass**
die Strukturfolie (32) in Fließrichtung des Abwassers gesehen durchgehende Längsstrukturen aufweist.

30. Vorrichtung nach einem der Ansprüche 23 und 29,
**dadurch gekennzeichnet, dass**
die Strukturfolie (32) eine Plissierstruktur, bestehend aus Dreiecken, Vierecken, Trapezen, aufweist.

31. Vorrichtung nach einem der Ansprüche 23 bis 30,
**dadurch gekennzeichnet, dass**
die Strukturfolie (32) lamellenartige, wabenartige oder wellenartige Strukturen oder punktuelle Erhöhungen oder Vertiefungen aufweist.

32. Vorrichtung nach einem der Ansprüche 23 bis 31,
**dadurch gekennzeichnet, dass**
die Sedimentationsflächen der Strukturfolie (32) aufgeraut sind.

33. Vorrichtung nach einem der Ansprüche 23 bis 32,
**dadurch gekennzeichnet, dass**
das zwischen der Eintrittskammer (40) und der Durchtrittskammer (50) eine Lochplatte (20) angeordnet ist, deren in Löcher (21) anströmseitig Senkungen (22) aufweisen.

34. Vorrichtung nach einem der Ansprüche 23 bis 33,
**dadurch gekennzeichnet, dass**
die Eintrittskammer (40) ein Strömungsleitelement (42) aufweist, das im oberen Bereich der Eintrittskammer (40) angeordnet ist.

35. Vorrichtung nach einem der Ansprüche 23 bis 34,
**dadurch gekennzeichnet, dass**
an der höchsten Stelle der Durchtrittskammer (50) oberhalb des Abscheiders (30) eine Entlüftungskanal (51) angeordnet ist, der mit dem in der Austrittskammer (60) befindlichen Abwasseraustritt (61) in Verbindung steht.

36. Vorrichtung nach einem der Ansprüche 23 bis 35,
**dadurch gekennzeichnet, dass**
der Abwasseraustritt (61) eine Durchflussbegrenzung (62) aufweist.

37. Vorrichtung nach einem der Ansprüche 23 bis 36,
**dadurch gekennzeichnet, dass**
die in einem Standfuß (13, 14) vorgesehene Druckkammer (72) eine gasundurchlässige, elastische Folie (71) aufweist.

38. Vorrichtung nach einem der Ansprüche 23 bis 37,
**dadurch gekennzeichnet, dass**
die Druckkammer (72) Luft oder ein anderes Gas enthält und unter leichtem Überdruck steht.

39. Vorrichtung nach einem der Ansprüche 23 bis 38,
**dadurch gekennzeichnet, dass**
der Füllstandsmesser (70) drucksensorisch mit der Druckkammer (72) verbunden ist.

40. Vorrichtung nach einem der Ansprüche 23 oder 39,
**dadurch gekennzeichnet, dass**
die Querschnittsfläche des Abscheiders (30) rund, oval oder eckig ist.

41. Vorrichtung nach einem der Ansprüche 23 oder 40,
**dadurch gekennzeichnet, dass**
die Querschnittsfläche des Gehäuses (10) rund, oval oder eckig ist.

42. Vorrichtung nach einem der Ansprüche 23 bis 41,
**dadurch gekennzeichnet, dass**
die Vorrichtung aus recycelbaren Kunststoffen besteht.
